# EUROPEAN PATENT APPLICATION

(11) **EP 4 411 921 A1**
(43) Date of publication of application: **07.08.2024**
(21) Application number: 22875801.7
(22) Date of filing: 12.09.2022
(51) Int. Cl.: H01M 10/0562, H01B 1/10, H01M 10/052

(54) **SOLID ELECTROLYTE POWDER, SOLID ELECTROLYTE LAYER, AND LITHIUM-ION ALL-SOLID-STATE BATTERY**

(30) Priority: 30.09.2021 JP 2021161464
(71) Applicant: AGC INC., Chiyoda-ku, Tokyo 1008405 (JP)
(72) Inventor: KUNISA, Yasuhiro, Tokyo 100-8405 (JP); INOUE, Junichi, Tokyo 100-8405 (JP)
(74) Representative: Müller-Boré & Partner Patentanwälte PartG mbB
(86) International application number: PCT/JP2022/034126
(87) International publication number: WO 2023/053929

(57) **Abstract**

The present invention relates to a solid electrolyte powder to be used in a lithium-ion all-solid-state battery, the volumetric grain size distribution in the solid electrolyte powder having a first peak within the grain size range of 0.5-0.7 µm and having a second peak within the grain size range of 1-3 µm.

## Description

### TECHNICAL FIELD

The present invention relates to a solid electrolyte powder, a solid electrolyte layer, and a lithium-ion all-solid-state battery. More specifically, the present invention relates to a solid electrolyte powder having excellent lithium ion conductivity for use in a lithium-ion all-solid-state battery, a solid electrolyte layer including the powder, and a lithium-ion all-solid-state battery including the solid electrolyte layer.

### BACKGROUND ART

Lithium-ion secondary batteries are widely used in portable electronic devices such as mobile phones and laptop computers.

In the related art, a liquid electrolyte has been used in a lithium-ion secondary battery, but a lithium-ion all-solid-state battery (hereinafter, also referred to as a solid battery) in which a solid electrolyte is used as an electrolyte of the lithium-ion secondary battery has attracted attention from the viewpoint that safety can be improved and high-speed charge and discharge can be expected.

As a technique relating to the solid battery, for example, Patent Literature 1 discloses a technique using a ball group consisting of two or more kinds of balls having different diameters when a sulfide solid electrolyte is manufactured using a ball mill.

### CITATION LIST

### PATENT LITERATURE

Patent Literature 1: JP2010-90003A

### SUMMARY OF INVENTION

### TECHNICAL PROBLEM

Since a liquid electrolyte easily permeates into a positive electrode or a negative electrode, an interface between an active material included in the positive electrode or the negative electrode and the liquid electrolyte is easily formed, and performance of a battery is easily improved.

On the other hand, since a solid electrolyte is inferior to the liquid electrolyte in permeability into the positive electrode and the negative electrode, battery performance is improved by reducing a particle diameter and the like so as to form more interfaces with the active material. In accordance with needs for weight reduction and the like of the solid battery, a solid electrolyte layer needs to be made thinner and sheet-like, and in order to prevent short circuits in the electrolyte layer, it is necessary to reduce a particle diameter of a solid electrolyte.

However, when the particle diameter of the solid electrolyte is too small, there is a problem that a degree of crystallinity is likely to decrease and a crystal structure is likely to be distorted and disturbed, and lithium ion conductivity is deteriorated.

In order to provide a solid electrolyte powder having excellent lithium ion conductivity, the present inventors have focused on particle diameter distribution of the solid electrolyte powder, and as a result of intensive studies, found that a solid electrolyte powder having peaks in two specific different particle diameter ranges in a volume-based particle diameter distribution has excellent lithium ion conductivity.

Accordingly, the present invention provides a solid electrolyte powder having excellent lithium ion conductivity.

### SOLUTION TO PROBLEM

A solid electrolyte powder according to an embodiment of the present invention is a solid electrolyte powder for use in a lithium-ion all-solid-state battery, in which the solid electrolyte powder has a volume-based particle diameter distribution having a first peak in a particle diameter range of 0.5 µm to 0.7 µm and a second peak in a particle diameter range of 1 µm to 3 µm.

In the solid electrolyte powder according to one aspect of the present invention, assuming that a peak frequency of the first peak is p1 (%) and a peak frequency of the second peak is p2 (%), p2/p1 may be 0.4 or more and 2.5 or less.

In the solid electrolyte powder according to one aspect of the present invention, a 50% diameter (D50) in a volume-based cumulative particle diameter distribution may be 0.7 µm to 2.5 µm.

In the solid electrolyte powder according to one aspect of the present invention, a 99% diameter (D99) in a volume-based cumulative particle diameter distribution may be 3 µm to 10 µm.

The solid electrolyte powder according to one aspect of the present invention may be a sulfide solid electrolyte powder.

A solid electrolyte layer according to the embodiment of the present invention includes the solid electrolyte powder described above.

A lithium-ion all-solid-state battery according to the embodiment of the present invention includes the solid electrolyte layer described above, a positive electrode, and a negative electrode.

### ADVANTAGEOUS EFFECTS OF INVENTION

Since the solid electrolyte powder according to the embodiment of the present invention has excellent lithium ion conductivity, a lithium-ion all-solid-state battery having high battery performance can be provided.

### BRIEF DESCRIPTION OF DRAWINGS

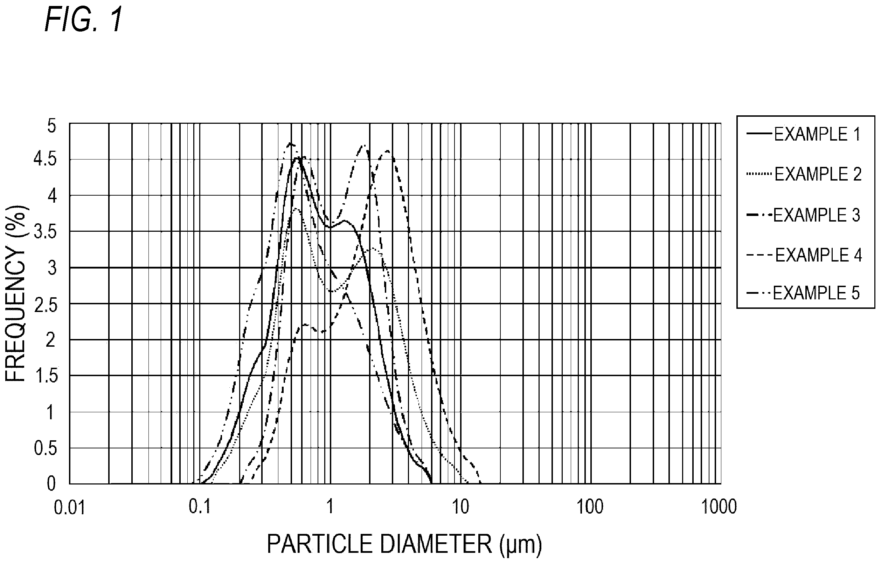

[FIG. 1] FIG. 1 is a diagram showing the volume-based particle diameter distribution of solid electrolyte powders in Examples.

### DESCRIPTION OF EMBODIMENTS

Hereinafter, the present invention will be described in detail, but the present invention is not limited to the following embodiment and can be freely modified and implemented without departing from the gist of the present invention. In addition, the word "to" that is used to express a numerical range includes the numerical values before and after the word as the upper limit value and the lower limit value of the range, respectively.

### <Solid Electrolyte Powder>

A solid electrolyte powder according to the embodiment of the present invention is used in a lithium-ion all-solid-state battery. The solid electrolyte powder is characterized in that a volume-based particle diameter distribution thereof has a first peak in a particle diameter range of 0.5 µm to 0.7 µm and a second peak in a particle diameter range of 1 µm to 3 µm.

A solid electrolyte refers to a solid electrolyte capable of moving ions therein. In the present invention, a type of the solid electrolyte is not particularly limited as long as it is a particle including a solid electrolyte having lithium ion conductivity, and a known solid electrolyte can be used. Examples thereof include inorganic solid electrolytes such as a sulfide solid electrolyte, an oxide solid electrolyte, lithium nitride, and lithium iodide. These solid electrolytes may be used alone or in combination.

Among these electrolytes, from the viewpoint of lithium ion conductivity, at least one of the sulfide solid electrolyte and the oxide solid electrolyte that have excellent lithium ion conductivity is preferable, and the sulfide solid electrolyte is more preferable.

The sulfide solid electrolyte is not particularly limited as long as it is sulfide-based, and one including sulfur (S) and having lithium ion conductivity can be preferably used. The sulfide solid electrolyte may include at least one of a crystal phase and an amorphous phase.

The crystal phase or the amorphous phase is not particularly limited as long as it includes Li, P, and S, and a known one can be applied. The sulfide solid electrolyte may include at least one of the crystal phase and the amorphous phase, or may include both.

Among these cases, at least one of the crystal phase and the amorphous phase preferably includes Ha in addition to Li, P, and S from the viewpoint of lithium ion conductivity. Ha is at least one kind of element selected from the group consisting of F, Cl, Br, and I.

Examples of a crystal structure of the crystal phase include an LGPS type such as Li₁₀GeP₂S₁₂ and Li_{9.54}Si_{1.74}P_{1.44}S_{11.7}Cl_{0.3}, and an argyrodite type such as Li₆PS₅Cl, Li_{5.4}PS_{4.4}Cl_{1.6}, Li_{5.6}PS_{4.4}Cl_{0.8}Br_{0.8}, and Li₆PS₅Cl_{0.5}Br_{0.5}. Examples of the amorphous phase include LPS crystallized glass such as Li₇P₃S₁₁, and crystallized glass including a composition containing Ha in addition to Li, P, and S. A phase structure of the crystal phase or the amorphous phase may be one type or two or more types.

When the crystal phase is included, the crystal structure thereof preferably includes an argyrodite type from the viewpoint of symmetry of the crystal structure. A crystal having high symmetry is preferable since paths for lithium ion conduction spread in three dimensions to form a powder. From the viewpoint of obtaining the powder by pulverization, the crystal having high symmetry is also preferable since the lithium ion conductivity is easily maintained.

In order to obtain an argyrodite crystal structure, the crystal phase includes Ha in addition to Li, P, and S. Ha more preferably includes at least one of Cl and Br, still more preferably includes Cl, and even more preferably includes a single substance of Cl or a mixture of Cl and Br.

The argyrodite crystal can be defined as including Li, P, S, and Ha, and having peaks at positions of 2θ = 15.7 ± 0.5° and 30.2 ± 0.5° in an X-ray powder diffraction (XRD) pattern. In addition to the above peaks, the XRD pattern preferably has a peak at position of 2θ = 18.0 ± 0.5°, and more preferably has a peak at position of 2θ = 25.7 ± 0.5°.

When expressed as LiₐPS_{b}Ha_{c}, the argyrodite crystal preferably satisfies relationships of 5 < a < 7, 4 < b < 6 and 0 < c < 2 since the crystal tends to become an argyrodite crystal. Such element ratio more preferably satisfies relationships of 5.1 < a < 6.3, 4 < b < 5.3, and 0.7 < c < 1.9, and still more preferably satisfies relationships of 5.2 < a < 6.2, 4.1 < b < 5.2, and 0.8 < c < 1.8.

That is, regarding a, 5 < a < 7 is preferable, 5.1 < a < 6.3 is more preferable, and 5.2 < a < 6.2 is still more preferable.

Regarding b, 4 < b < 6 is preferable, 4 < b < 5.3 is more preferable, and 4.1 < b < 5.2 is still more preferable.

Regarding c, 0 < c < 2 is preferable, 0.7 < c < 1.9 is more preferable, and 0.8 < c < 1.8 is still more preferable.

Note that in the present specification, the "element ratio" means a ratio of a content (at%) of an element.

In the case of the argyrodite crystal, a preferable crystal structure is, for example, a cubic crystal such as F-43m, and a hexagonal crystal, a tetragonal crystal, an orthorhombic crystal, a monoclinic crystal, or the like having reduced symmetry or a triclinic crystal or the like having further reduced symmetry may exist.

When Ha constituting the argyrodite crystal includes Cl and Br, a ratio represented by (x/y) is preferably 0.1 or more, more preferably 0.3 or more, and still more preferably 0.5 or more, in which x (at%) is a content of Cl in the argyrodite crystal and y (at%) is a content of Br in the argyrodite crystal. The ratio represented by (x/y) is preferably 10 or less, more preferably 3 or less, and still more preferably 1.6 or less.

When the ratio represented by (x/y) satisfies the above range, an interaction between lithium ions and halide ions is weakened, and the lithium ion conductivity of the sulfide solid electrolyte is likely to be satisfactory. This is considered to be caused by an influence of a mixed anion effect, which weakens an interaction between cations and anions by mixing bromide ions having an ionic radius larger than that of chloride ions. When the ratio represented by (x/y) satisfies the above range, cycle characteristics of a lithium-ion secondary battery are likely to be improved.

In the case where Ha includes Cl and Br, when a ratio of the contents (at%) of elements constituting the argyrodite crystal is expressed as Liₐ-P-S_{b}-Cl_{c1}-Br_{c2}, c1 is preferably 0.1 or more, more preferably 0.3 or more, and still more preferably 0.5 or more. Preferably, c1 is 1.5 or less, more preferably 1.4 or less, and still more preferably 1.3 or less.

Preferably, c2 is 0.1 or more, more preferably 0.3 or more, and still more preferably 0.5 or more. Preferably, c2 is 1.9 or less, more preferably 1.6 or less, and still more preferably 1.4 or less.

When c1 and c2 each satisfy the above ranges, a stable argyrodite crystal can be obtained while an abundance proportion of halide ions in the crystal is optimized and the interaction between the anions and the lithium ions in the crystal is reduced. Accordingly, the lithium ion conductivity of the solid electrolyte is likely to be satisfactory. When c1 and c2 each satisfy the above ranges, the cycle characteristics of the lithium-ion secondary battery are likely to be improved.

Here, a, b, and (c1 + c2) preferably satisfy the same relationships as the above-described a, b, and c.

A crystallite size of the crystal constituting the crystal phase is preferably small from the viewpoint of obtaining good lithium ion conductivity when forming a battery. Specifically, the crystallite size is preferably 1,000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of a peak in the XRD pattern and the Scherrer equation.

In the crystal phase in the sulfide solid electrolyte according to the present embodiment, a counter anion is fixed in the crystal structure thereof. The amorphous phase in the sulfide solid electrolyte can also form an anion structure in the structure by adjusting the composition.

The counter anion or anion structure differs depending on a structure such as the crystal structure, and examples thereof include PS₄³⁻, P₂S₆⁴⁻, P₂S₇⁴⁻, O²⁻, S²⁻, Se²⁻, F⁻, Cl⁻, Br⁻ and I⁻.

Among these, it is preferable to include PS₄³⁻ having a tetrahedral structure from the viewpoint of improvement in heat resistance of the crystal and a thermodynamically stable effect.

Note that when the argyrodite crystal is Li₆PS₅Cl, a counter anion constituting LiePSsCl is a PS₄³⁻ tetrahedron. In addition, examples of a crystal phase in which the counter anion is the PS₄³⁻ tetrahedron include an LGPS crystal and LPS crystallized glass.

The structure of the counter anion included in the crystal phase can be determined by structural analysis performed from an XRD pattern. The anion structure included in the amorphous phase can be determined by the Raman spectroscopy or the nuclear magnetic resonance (NMR).

The sulfide solid electrolyte according to the present embodiment may include, in addition to the crystal phase or the amorphous phase containing Li, P, and S, an anion such as an oxide anion substituted at a site having the counter anion or anion structure as described above, Li₃PS₄, Li₄P₂S₆, Li₂S, LiHa (Ha is at least one kind of halogen element selected from F, Cl, Br, and I), and the like.

A total content of elements constituting the crystal phase and the amorphous phase containing Li, P, and S in the sulfide solid electrolyte is preferably 60 mass% or more, more preferably 80 mass% or more, and still more preferably 90 mass% or more, from the viewpoint of achieving the high ion conductivity. An upper limit of the total content is not particularly limited, and may be 100 mass%. In the case where two or more kinds of crystal phases and amorphous phases are present, a total content thereof is preferably in the above range.

The total content of the elements constituting the crystal phase and the amorphous phase is determined by a composition analysis using ICP emission spectrometry, atomic absorption, ion chromatography, or the like. A proportion of the crystal phase can be calculated by adding an internal standard substance, measuring with XRD or neutral-beam scattering, and then comparing peak intensity with that of the internal standard substance.

The oxide solid electrolyte is not particularly limited as long as it is oxide-based, and one including oxygen (O) and having lithium ion conductivity can be preferably used.

Examples thereof include perovskite oxide including lithium, garnet oxide including lithium, lithium phosphate (Li₃PO₄), lithium niobate (LiNbO₃), LAGP with the NASICON structure (Li₁₊ₓAlₓGe₂₋ₓ(PO₄)₃ (0 ≤ x ≤ 1)), LATP with the NASICON structure (Li₁₊ₓAlₓTi_{2- x}(PO₄)₃ (0 ≤ x ≤ 1)), and LZP with the NASICON structure (Li₁₊₄ₓZr₂₋ₓ(PO₄)₃ (0 ≤ x ≤ 0.4, some metal elements in LZP may be replaced with other metal element, or may be doped with other metal element. Examples of the other metal element include Na, Sr, Ca, Mg, La, Y, Sc, Ce, In, Al, Ge, Ti, and V). These oxide solid electrolytes may be used alone or in combination.

The perovskite oxide including lithium is an oxide represented by ABO₃ having a perovskite crystal structure, and it is preferable that the A site contains Li and at least one kind of element selected from the group consisting of La, Sr, Ba, Na, Ca, and Nd, and the B site contains at least one kind of element selected from the group consisting of Ti, Ta, Cr, Fe, Co, Ga, and Nb.

Specifically, examples of the perovskite oxide include lithium lanthanum titanate Li₃ₓLa_{2/3-x}TiO₃ (0 ≤ x ≤ 1/6, also referred to as LLTO) and lithium lanthanum niobate (LiₓLa_{(1 -x)/3}NbO₃) (0 ≤ x ≤ 1). Note that a part of the elements constituting the lithium lanthanum titanate may be replaced with other element, or may be doped with other element. Examples of the other element include Na, K, Rb, Ag, Tl, Mg, Sr, Ca, Ba, Nb, Ta, W, Ru, Cr, Mn, Fe, Co, Al, Ga, Si, Ge, Zr, Hf, Pr, Nd, Sm, Gd, Dy, Y, Eu, and Tb, and specific examples of the lithium lanthanum titanate include La_{(2/3)-x}SrₓLiₓTiO₃ and LiₓLa_{2/3}Ti₁₋ₓAlₓO₃.

Examples of the garnet oxide include Li₇La₃Zr₂O₁₂, Li₅La₃Nb₂O₁₂, Li₅La₃Ta₂O₁₂, and Li₆La₂BaTa₂O₁₂.

Note that the oxide solid electrolyte is not limited to a crystal material, and may be an amorphous material. For example, the oxide solid electrolyte may be composited with Li₄SiO₄, Li₃PO₄, Li₃BO₃, SiO₂, B₂O₃, or the like as an amorphous material.

In the solid electrolyte powder of the present embodiment, volume-based particle diameter distribution has a first peak in a particle diameter range of 0.5 µm to 0.7 µm and a second peak in a particle diameter range of 1 µm to 3 µm. Here, the "peak" refers to a peak that can be separated as a peak by a non-linear least squares unless otherwise specified.

The present inventors have found that the lithium ion conductivity of the solid electrolyte powder is improved by having peaks in two specific different particle diameter ranges in the particle diameter distribution of the solid electrolyte powder. Although reasons therefor is unclear, it is considered that since particles having a large particle diameter range are likely to maintain the crystal structure, a decrease in lithium ion conductivity due to pulverization can be prevented, and that particles having a large particle diameter range serve as a nucleus, and particles having a small particle diameter range around easily come into contact with the particles serving as a nucleus, so that the number of contact points increases, which tends to reduce interfacial resistance. The solid electrolyte powder having peaks in different particle diameter ranges may form a close-packed-like structure between particles, and it is presumed that these factors contribute to the improvement of lithium ion conductivity.

The volume-based particle diameter distribution and the volume-based cumulative particle diameter distribution of the solid electrolyte powder of the present embodiment can be measured by a laser diffraction type particle size distribution measuring device. For example, Microtrac MT3300 EX II manufactured by MicrotracBEL Corp. can be used.

In the solid electrolyte powder in the present embodiment, assuming that a peak frequency of the first peak in a particle diameter range of 0.5 µm to 0.7 µm is p1 (%) and a peak frequency of the second peak in a particle diameter range of 1 µm to 3 µm is p2 (%), p2/p1 is preferably 0.4 or more and 2.5 or less.

When p2/p1 is in the above range, the lithium ion conductivity is further improved. Specifically, when p2/p1 is 0.4 or more, a single peak around 0.6 µm can be prevented. Accordingly, it is possible to prevent a decrease in conductivity due to an excessively small particle diameter.

When p2/p1 is 2.5 or less, a single peak around 2 µm to 3 µm can be prevented. As a result, it is possible to prevent an increase in interfacial resistance during assembling of a battery due to a large particle diameter, which leads to a reduction in resistance, and it is also possible to prevent short circuits in an electrolyte layer.

Here, the "peak frequency" means an abundance ratio (%) of a particle diameter at a peak apex.

More preferably, p2/p1 is 0.5 or more, still more preferably 0.7 or more, and particularly preferably 0.8 or more.

More preferably, p2/p1 is 2.0 or less, still more preferably 1.4 or less, and particularly preferably 1.1 or less.

The solid electrolyte powder of the present embodiment preferably has a 50% diameter (D50) of 0.7 µm to 2.5 µm in volume-based cumulative particle diameter distribution.

When D50 is 2.5 µm or less, which is a small particle diameter, more interfaces with the active material are formed, and the battery performance is improved. Continuity between the solid electrolyte powders is easily ensured, and an increase in interfacial resistance can be prevented. The electrolyte layer becomes dense, which leads to prevention of an increase in the interfacial resistance. Further, a short circuit is easily prevented.

When D50 is 0.7 µm or more, the particle diameter does not become too small, so that crystallinity of the solid electrolyte powder is hardly impaired, and good lithium ion conductivity is obtained.

D50 is preferably 0.8 µm or more, and more preferably 1.0 µm or more. D50 is more preferably 1.5 µm or less, and still more preferably 1.2 µm or less.

The solid electrolyte powder of the present embodiment preferably has a 99% diameter (D99) of 3 µm to 10 µm in the volume-based cumulative particle diameter distribution.

When D99 is 10 µm or less, which is a small particle diameter, more interfaces with the active material are formed, and the battery performance is improved. Continuity between the solid electrolyte powders is easily ensured, and an increase in interfacial resistance can be prevented. The electrolyte layer becomes dense, which leads to prevention of an increase in the interfacial resistance. Further, a short circuit is easily prevented.

When D99 is 3 µm or more, the particle diameter does not become too small, so that crystallinity of the solid electrolyte powder is hardly impaired, and good lithium ion conductivity is obtained.

D99 is more preferably 3.5 µm or more. D99 is more preferably 8 µm or less, still more preferably 6 µm or less, and particularly preferably 4 µm or less.

The solid electrolyte powder of the present embodiment preferably has a 10% diameter (D10) of 0.1 µm to 0.6 µm in the volume-based cumulative particle diameter distribution.

When D10 is 0.6 µm or less, which is a small particle diameter, more interfaces with the active material are formed, and the battery performance is improved. Continuity between the solid electrolyte powders is easily ensured, and an increase in interfacial resistance can be prevented. The electrolyte layer becomes dense, which leads to prevention of an increase in the interfacial resistance. Further, a short circuit is easily prevented.

When D10 is 0.1 µm or more, the particle diameter does not become too small, so that crystallinity of the solid electrolyte powder is hardly impaired, and good lithium ion conductivity is obtained.

D10 is more preferably 0.2 µm or more. D10 is more preferably 0.5 µm or less, still more preferably 0.4 µm or less, and particularly preferably 0.3 µm or less.

The solid electrolyte powder of the present embodiment preferably has a 90% diameter (D90) of 1.5 µm to 6 µm in the volume-based cumulative particle diameter distribution.

When D90 is 6 µm or less, which is a small particle diameter, more interfaces with the active material are formed, and the battery performance is improved. Continuity between the solid electrolyte powders is easily ensured, and an increase in interfacial resistance can be prevented. The electrolyte layer becomes dense, which leads to prevention of an increase in the interfacial resistance. Further, a short circuit is easily prevented.

D90 is more preferably 2 µm or more. D90 is more preferably 5 µm or less, and still more preferably 3 µm or less.

In the solid electrolyte powder of the present embodiment, the conductivity is preferably 4 mS/cm or more, more preferably 5 mS/cm or more, and still more preferably 6 mS/cm or more. Here, the "conductivity" means lithium ion conductivity, and is measured by a method described in Examples below.

In the solid electrolyte powder of the present embodiment, a pressure of 382 MPa is applied to obtain a powder body. A density of the powder body at this time is 1.65 g/cm³ to 1.75 g/cm³. When the density of the powder body is in the above range, particularly 1.70g/cm³ or more, the number of contact points between particles of the powder body increases, which is suitable for measurement of the conductivity. Here, the "density of the powder body when a pressure of 382 MPa is applied" is measured by a method described in Examples below.

A method for manufacturing the solid electrolyte powder of the present embodiment is not particularly limited, and in addition to uniformization using a mortar, mechanical milling can be performed using a planetary mill, a ball mill, a vibration mill, a bead mill, or the like.

Among these, from the viewpoint of obtaining a solid electrolyte powder having peaks in two specific different particle diameter ranges, it is preferable to manufacture the solid electrolyte powder by mechanical milling using a ball mill.

More specifically, in order to make the solid electrolyte powder of the present embodiment have peaks in two specific different particle diameter ranges in the particle diameter distribution, it is preferable to manufacture the solid electrolyte powder by grinding pulverization using a planetary ball mill or the like, collision pulverization using a bead mill or the like, compression pulverization, or shearing pulverization.

According to grinding pulverization, an object is sandwiched between two or more relatively moving working surfaces, friction is generated between the object and the working surfaces due to the movement of the working surfaces, and small pieces are sequentially scraped from a surface of the object. It is considered that the small pieces become the first peak having a particle diameter of 0.5 µm to 0.7 µm, and a nucleus portion where the surface is scraped off becomes the second peak having a particle diameter of 1 µm to 3 µm.

Specifically, for example, in a case where pulverization is performed for a predetermined time or more using 1-mm alumina balls as the media, when D50 is approximately 0.5 µm to 0.7 µm, a state (saturated state) is reached in which the particles cannot be pulverized to a smaller particle diameter, and the particles form a single peak with a particle diameter of 0.5 µm to 0.7 µm. Therefore, in order to obtain the two different peaks, it is necessary to stop the pulverization before reaching the saturated state, so that in addition to the particle diameter of 0.5 µm to 0.7 µm, a peak is also obtained in the particle diameter of 1 µm to 3 µm.

For example, when 3-mm alumina balls are used as the media, since the ball diameter is relatively large, gaps between the balls are relatively large, and there are particles that do not hit the balls. Therefore, it is presumed that a saturated state is reached when the particle diameter is approximately 1 µm. In this case, since not all particles as nuclei are broken, two different peaks are obtained at particle diameter ranges of 0.5 µm to 0.7 µm and 1 µm to 3 µm.

According to collision pulverization, compression pulverization, and shearing pulverization, a hammer, a ball, or the like that moves at a high speed instantaneously applies an impact to an object, and the object is more pulverized by the impact. It is considered that the crushed fragments form the first peak having a particle diameter of 0.5 µm to 0.7 µm, and a nucleus of the object to be crushed forms the second peak having a particle diameter of 1 µm to 3 µm.

Specifically, for example, when 0.5-mm alumina balls are used as the media, as pulverization continues, the peaks of the particle diameter distribution shift toward smaller particle diameters. Thereafter, the first peak and the second peak are obtained by keeping the smaller peak at the particle diameter of 0.5 µm to 0.7 µm and keeping the other peak at the particle diameter of 1 µm to 3 µm. If the pulverization is continued as it is, a single peak in which peaks gather at approximately 0.5 µm will be obtained. Therefore, in order to obtain two peaks in different particle diameter ranges, it is necessary to stop the pulverization before reaching the saturated state, so that in addition to the particle diameter of 0.5 µm to 0.7 µm, a peak is also obtained in the particle diameter of 1 µm to 3 µm.

As described above, the solid electrolyte powder of the present embodiment having peaks in the two specific different particle diameter ranges can be manufactured by appropriately adjusting the pulverizing method, the type and size of the media used for pulverization, the pulverization time, and the like.

The material and size of the balls used in the ball mill are not particularly limited, and known ones in the related art can be used. Examples of the material of the balls used in the ball mill include alumina, zirconia, glass, and silicon nitride. The size of the ball is, for example, 0.5 mm to 4 mm. The pulverization time is, for example, 30 minutes to 120 minutes.

### <Solid Electrolyte Layer>

The solid electrolyte layer according to the present embodiment includes the solid electrolyte powder and is used for a lithium-ion all-solid-state battery. A binder may be included as necessary.

A content of the solid electrolyte powder in the solid electrolyte layer is not particularly limited, and may be appropriately determined according to performance of a target battery. For example, when the entire solid electrolyte layer is 100 mass%, the content of the solid electrolyte powder is preferably 80 mass% or more, and more preferably 90 mass% or more.

Examples of the binder that can be contained in the solid electrolyte layer include butadiene rubber (BR), acrylate butadiene rubber (ABR), styrene butadiene rubber (SBR), polyvinylidene fluoride (PVdF), and polytetrafluoroethylene (PTFE). The content of the binder in the solid electrolyte layer may be the same as that in the related art.

A thickness of the solid electrolyte layer is not particularly limited, and may be appropriately determined according to the performance of the target battery. For example, the thickness is preferably 10 µm or more, and more preferably 20 µm or more. When the thickness of the solid electrolyte layer is 10 µm or more, it is possible to obtain a solid electrolyte layer having high mechanical strength, high resistance to stress such as vibration and bending, and high reliability.

The thickness of the solid electrolyte layer is preferably 50 µm or less, and more preferably 30 µm or less. By reducing the thickness of the solid electrolyte layer to 50 µm or less, ion conductivity between positive and negative electrodes can be increased, and an energy density of the battery can also be increased.

A method for forming the solid electrolyte layer is not particularly limited. For example, the solid electrolyte layer can be formed by dispersing or dissolving components constituting the solid electrolyte layer in a solvent to form a slurry, applying the slurry in the form of a layer (sheet), drying the slurry, and pressing in a free manner. If necessary, the binder may be removed by heating. The thickness of the solid electrolyte layer can be easily adjusted by adjusting a coating amount of the slurry or the like.

Note that instead of the wet molding as described above, the solid electrolyte layer may be formed by pressing the solid electrolyte powder or the like by a dry method on a surface of a target (a positive electrode, a negative electrode, or the like) on which the solid electrolyte layer is to be formed. Alternatively, a solid electrolyte layer may be formed on another base material, and be transferred to a surface of the target on which the solid electrolyte layer is to be formed. From the viewpoint that a strong solid electrolyte layer can be industrially stably formed on a surface of a target on which the solid electrolyte layer is to be formed, the solid electrolyte layer is preferably formed on the surface of the target by wet molding using a solvent.

### <Lithium-ion All-solid-state Battery>

A lithium-ion all-solid-state battery according to the present embodiment includes the solid electrolyte layer, a positive electrode, and a negative electrode. As the positive electrode and the negative electrode, known ones in the related art are used. Specific examples are shown below, but the present invention is not limited thereto.

### (Positive Electrode)

The positive electrode includes at least a positive electrode current collector and a positive electrode active material.

The positive electrode current collector may be a conductive plate material, and for example, a thin metal plate (metal foil) of aluminum, an alloy thereof, or stainless steel can be used. These are preferable because they are excellent in electrolytic solution resistance and oxidation resistance.

The positive electrode active material is not particularly limited as long as occlusion and release of lithium ions, desorption and insertion (intercalation) of lithium ions, or doping and de-doping of counter anions (for example, PF₆⁻) of the lithium ions can proceed reversibly, and known positive electrode active materials can be used. Examples of the positive electrode active material include lithium cobalt oxide (LiCoO₂), lithium nickel oxide (LiNiO₂), lithium manganate (LiMnO₂), nickel manganate lithium, a composite metal oxide represented by Li(NiₓCo_{y}Mn_{z}Mₐ)O₂ (x + y + z + a = 1, 0 ≤ x ≤ 1, 0 ≤ y ≤ 1, 0 ≤ z ≤ 1, 0 ≤ a ≤ 1, M is at least one selected from Al, Mg, Nb, Ti, Cu, Zn, Cr), and a polyanionic olivine type positive electrode represented by LiₐM_{b}(PO₄)_{c} (1 ≤ a ≤ 4, 1 ≤ b ≤ 2, 1 ≤ c ≤ 3, and M is at least one selected from Fe, V, Co, Mn, Ni, and VO).

The positive electrode may include a binder that binds the positive electrode active materials to each other and binds the positive electrode active material to the positive electrode current collector. A known binder in the related art can be used.

The positive electrode may include a known conductive aid for a positive electrode, and examples thereof include carbon-based materials such as graphite and carbon black, metals such as copper, nickel, stainless steel, and iron, and conductive oxides such as indium tin oxide (ITO).

### (Negative Electrode)

The negative electrode includes at least a negative electrode current collector and a negative electrode active material.

The negative electrode current collector may be a conductive plate material, and for example, a thin metal plate (metal foil) such as copper or aluminum can be used. These are preferable because they are excellent in electrolytic solution resistance and oxidation resistance.

The negative electrode active material is not particularly limited, and a material capable of inserting and desorbing lithium ions may be used. For example, lithium metal, a carbon-based material, silicon, a silicon alloy, or tin can be used.

The negative electrode active material is not particularly limited as long as occlusion and release of lithium ions, desorption and insertion (intercalation) of lithium ions, or doping and de-doping of counter anions (for example, PF₆⁻) of the lithium ions can proceed reversibly, and known negative electrode active materials can be used. Examples of the negative electrode active material include carbon materials such as graphite, hard carbon, and soft carbon, metals capable of forming an alloy with lithium such as aluminum, silicon, and tin, amorphous oxides such as silicon oxide and tin oxide, and lithium titanate (Li₄Ti₅O₁₂).

In addition, the negative electrode may include a binder that binds the negative electrode active materials to each other and binds the negative electrode active material to the negative electrode current collector. A known binder in the related art can be used.

The negative electrode may include a known conductive aid for a negative electrode, and the same conductive aid for the positive electrode as described above can be used.

Those constituting the lithium-ion all-solid-state battery such as the solid electrolyte layer, the positive electrode, and the negative electrode are stored in a battery outer casing. As a material of the battery outer casing, known materials in the related art can be used, and specific examples thereof include nickel-plated iron, stainless steel, aluminum, alloys thereof, nickel, titanium, resin materials, and film materials.

Examples of the shape of the lithium-ion all-solid-state battery include a coin shape, a sheet shape (film shape), a folded shape, a wound cylindrical shape with a bottom, and a button shape, and can be appropriately selected according to an application thereof.

The lithium-ion all-solid-state battery according to the present embodiment can achieve good lithium ion conductivity.

### EXAMPLES

Hereinafter, the present invention will be specifically described with reference to Examples, but the present invention is not limited thereto.

### <Production of Solid Electrolyte Powder>

Solid electrolyte powders of Examples 1 to 5 were produced by the following method. Example 1 to Example 4 are Working Examples, and Example 5 is Comparative Example.

### (Example 1)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) by a cutter mill was pulverized by a mortar with hands (coarse pulverization), and a sulfide solid electrolyte material having a diameter of 150 µm or less was sorted using a powder that passed through a sieve having an opening of 150 µm.

Subsequently, a solvent for fine pulverization was prepared. The solvent was a mixed solvent (100 g) of 62.5 g of heptane (manufactured by KANTO CHEMICAL CO.,INC., prime class (dehydrated-Super-) and 37.5 g of dibutyl ether (manufactured by Tokyo Chemical Industry Co., Ltd., stabilized with BHT). The mixed solvent was left overnight or longer, and a pre-dehydrated solvent was used.

Subsequently, 100 g of the mixed solvent, 25 g of the sorted sulfide solid electrolyte, and 400 g of high-purity alumina balls having a diameter of 1 mm (AL9 series, manufactured by AS ONE Corporation) were put into a 500 mL zirconia container (manufactured by Ito Seisakusho Co., Ltd.), and the container was set in a medium planetary ball mill LP-4 manufactured by Ito Seisakusho Co., Ltd., and wet pulverization was performed at a rotation speed of 150 rpm for 30 minutes while maintaining a temperature at approximately 13°C with cooling with a spot cooler. Thereafter, the pulverized mixture was passed through a stainless steel sieve having an opening of 150 µm to collect the high-purity alumina balls having a diameter of 1 mm. The mixture was allowed to stand for 3 hours to 5 hours, and the slurry from which a supernatant liquid was removed was put into a bottle, and was put into a separable flask inserted into a mantle heater in a glove box. The solvent was dried by heating while flowing nitrogen gas to obtain a dry powder. Thereafter, the dry powder was loosened in a mortar and passed through a stainless steel sieve having an opening of 150 µm to obtain the solid electrolyte powder of Example 1.

### (Example 2)

A dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) by a cutter mill was pulverized by a mortar with hands (coarse pulverization), and a sulfide solid electrolyte having a diameter of 150 µm or less was sorted using a powder that passed through a sieve having an opening of 150 µm. The solid electrolyte powder of Example 2 was obtained by the same method as that of Example 1 except that the size of the high-purity alumina balls of AL9 series was set to 3 mm in diameter and the wet pulverization time was set to 60 minutes.

### (Example 3)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) by a cutter mill was pulverized by a mortar with hands (coarse pulverization), and a sulfide solid electrolyte having a diameter of 100 µm or less was sorted using a powder that passed through a sieve having an opening of 100 µm.

Subsequently, a solvent for fine pulverization was prepared. The solvent was a mixed solvent (253 g) of 158.1 g of heptane (manufactured by KANTO CHEMICAL CO.,INC., prime class (dehydrated-Super-) and 94.9 g of dibutyl ether (manufactured by Tokyo Chemical Industry Co., Ltd., stabilized with BHT). As the mixed solvent, molecular sieves 4A 1/16 (manufactured by FUJIFILM Wako Pure Chemical Corporation) was added and allowed to stand overnight or longer, and a pre-dehydrated solvent was used.

Subsequently, 253 g of the mixed solvent was charged with 48.2 g (solid content concentration: 16 wt%) of the sorted sulfide solid electrolyte and 288 g of high-purity alumina balls (AL9 series, manufactured by AS ONE Corporation) having a diameter of 0.5 mm (filling rate: 80 vol%), and wet pulverization was performed for 10 minutes at a peripheral speed of 8 m/sec and a slurry flow rate of 300 mL/min using a bead mill model (LMZ015, manufactured by Ashizawa Finetech Ltd.). Thereafter, the powder was dried in the same manner as in Example 1, loosened in a mortar, and passed through a sieve having an opening of 150 µm to obtain the solid electrolyte powder of Example 3.

### (Example 4)

The solid electrolyte powder of Example 4 was obtained in the same manner as in Example 2 except that the pulverization time was set to 30 minutes.

### (Example 5)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) by a cutter mill was pulverized by a mortar with hands (coarse pulverization), and a sulfide solid electrolyte having a diameter of 150 µm or less was sorted using a powder that passed through a sieve having an opening of 150 µm.

Subsequently, a solvent for fine pulverization was prepared. The solvent was a mixed solvent (8 g) of 5 g of heptane (manufactured by KANTO CHEMICAL CO.,INC., prime class (dehydrated-Super-) and 3 g of dibutyl ether (manufactured by Tokyo Chemical Industry Co., Ltd., stabilized with BHT). As the mixed solvent, molecular sieves 4A 1/16 (manufactured by FUJIFILM Wako Pure Chemical Corporation) was added and allowed to stand overnight or longer, and a pre-dehydrated solvent was used.

Subsequently, 8 g of the mixed solvent, 2 g of the sorted sulfide solid electrolyte, and 40 g of high-purity alumina balls (AL9 series manufactured by AS ONE Corporation) having a diameter of 2 mm were put into a 45 mL zirconia container (manufactured by Ito Seisakusho Co., Ltd.), and the container was set in a small planetary ball mill LP-M4 manufactured by Ito Seisakusho Co., Ltd., and wet pulverization was performed for the first time at 25°C and a rotation speed of 200 rpm for 20 minutes. The mixture was passed through a stainless steel sieve having an opening of 150 µm to collect the high-purity alumina balls having a diameter of 2 mm, and then charged with 40 g of high-purity alumina balls having a diameter of 0.3 mm (AL series, manufactured by AS ONE Corporation) instead, and the container was set in a planetary ball mill LP-M4 manufactured by Ito Seisakusho Co., Ltd., and wet pulverization was performed for the second time at 25°C and a rotation speed of 200 rpm for 105 minutes. The mixture was passed through a stainless steel sieve having an opening of 150 µm to collect the high-purity alumina balls having a diameter of 0.3 mm, dried by the same drying method as in Example 1, loosened in a mortar, and passed through a sieve having an opening of 150 µm to obtain the solid electrolyte powder of Example 5.

Production conditions of the solid electrolyte powders of Examples 1 to 5 are summarized in Tables 1 and 2 below.

**[Table 1]**

| | Pot capacity (ml) | Model | Rotation speed (rpm) | Atmosphere temperature (°C) | Charged electrolyte powder mass (g) | Solvent | |
|---|---|---|---|---|---|---|---|
| | | | | | | Heptane (g) | Dibutyl ether (g) |
| Example 1 | 500 | Planetary ball mill LP-4 | 150 | 13 | 25 | 62.5 | 37.5 |
| Example 2 | 500 | Planetary ball mill LP-4 | 150 | 13 | 25 | 62.5 | 37.5 |
| Example 4 | 500 | Planetary ball mill LP-4 | 150 | 13 | 25 | 62.5 | 37.5 |
| Example 5 | 45 | Planetary ball mill LP-M4 | 200 | 25 | 2 | 5 | 3 |

**[Table 1] (continued)**

| | First stage | | | Second stage | | |
|---|---|---|---|---|---|---|
| | Ball size (mm) | Ball amount (g) | Pulverization time (min) | Ball size (mm) | Ball amount (g) | Pulverization time (min) |
| Example 1 | 1 | 400 | 30 | - | - | - |
| Example 2 | 3 | 400 | 60 | - | - | - |
| Example 4 | 3 | 400 | 30 | - | - | - |
| Example 5 | 2 | 40 | 20 | 0.3 | 40 | 105 |

**[Table 2]**

| | Model | Peripheral speed (m/min) | Slurry flow rate (mL/min) | Chiller temperature (°C) | Charged electrolyte powder mass (g) | Solvent | | First stage | | |
|---|---|---|---|---|---|---|---|---|---|---|
| | | | | | | Heptane (g) | Dibutyl ether (g) | Ball size (mm) | Ball amount (g) | Pulverization time (min) |
| Example 3 | Bead mill LMZ015 | 8 | 300 | 15 | 48.2 | 158.1 | 94.9 | 0.5 | 288 | 10 |

### [Methods for Measuring Particle Diameter and Particle Size Distribution]

D10, D50, D90, and D99 in the volume-based cumulative particle diameter distribution and the first peak frequency p1 and the second peak frequency p2 in the volume-based particle diameter distribution were measured by a wet method using a laser diffraction type particle size distribution measuring device and Microtrac MT3300 EX II manufactured by MicrotracBEL Corp.

Results are shown in Table 3 and FIG. 1.

### [Conductivity]

The lithium ion conductivity of the solid electrolyte powders of Examples 1 to 5 was measured by the AC impedance method.

Specifically, in a glove box having a dew point of -50°C or lower, the sulfide solid electrolyte powder of each of Examples 1 to 5 was put into a cylinder having an inner diameter of 1 cm Φ by using a manual Newton press machine NT-50H (manufactured by KENIS LIMITED), and the pressure was applied up to 30 kN to form a powder body. Thereafter, the lithium ion conductivity was measured by applying AC impedance from an electrochemical measurement system VSP (manufactured by BioLogic) under conditions of an applied voltage of 100 mV, a measurement temperature of 25°C, and a measurement frequency range of 100 Hz to 1 MHz.

Results are shown in Table 3.

### [Powder Body Density]

A thickness of the pellets obtained in measuring of conductivity, that is, the pellets compressed by being applied with a pressure of 382 MPa, was measured, and the pellet density, that is, the powder body density, was obtained from a weight of the electrolyte powder and a volume of the pellets. Results are shown in Table 3.

**[Table 3]**

| | D10 (µm) | D50 (µm) | D90 (µm) | D99 (µm) | First peak frequency p1 (%) [0.5 µm to 0.7 µm] | Second peak frequency p2 (%) [1 µm to 3 µm] | Peak frequency ratio [p2/p1] | Conductivity (mS/cm) | Powder body density (g/cm³) under 382 MPa |
|---|---|---|---|---|---|---|---|---|---|
| Example 1 | 0.29 | 0.75 | 2.08 | 3.83 | 4.51 | 3.64 | 0.81 | 6.31 | 1.71 |
| Example 2 | 0.34 | 1.03 | 3.35 | 6.99 | 3.82 | 3.27 | 0.86 | 4.80 | 1.78 |
| Example 3 | 0.45 | 1.05 | 2.42 | 4.14 | 4.53 | 4.71 | 1.04 | 4.08 | 1.71 |
| Example 4 | 0.57 | 2.05 | 4.98 | 9.66 | 2.20 | 4.61 | 2.10 | 5.97 | 1.78 |
| Example 5 | 0.23 | 0.58 | 1.87 | 3.96 | 4.72 | - | - | 2.60 | 1.67 |

As shown in Table 3 and FIG. 1, it was found that the solid electrolyte powders of Examples 1 to 4 having the first peak in the particle diameter range of 0.5 µm to 0.7 µm and the second peak in the particle diameter range of 1 µm to 3 µm in the volume-based particle diameter distribution had higher conductivity and were more satisfactory than the solid electrolyte powder of Example 5 having no second peak in the particle diameter range of 1 µm to 3 µm.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

Note that the present application is based on Japanese Patent Application No. 2021-161464 filed on September 30, 2021, contents of which are incorporated herein by reference.

## Claims

1. A solid electrolyte powder for use in a lithium-ion all-solid-state battery, wherein
the solid electrolyte powder has a volume-based particle diameter distribution having a first peak in a particle diameter range of 0.5 µm to 0.7 µm and a second peak in a particle diameter range of 1 µm to 3 µm.

2. The solid electrolyte powder according to claim 1, wherein
assuming that a peak frequency of the first peak is p1 (%) and a peak frequency of the second peak is p2 (%), p2/p1 is 0.4 or more and 2.5 or less.

3. The solid electrolyte powder according to claim 1 or 2, having a 50% diameter (D50) in a volume-based cumulative particle diameter distribution of 0.7 µm to 2.5 µm.

4. The solid electrolyte powder according to any one of claims 1 to 3, having a 99% diameter (D99) in a volume-based cumulative particle diameter distribution of 3 µm to 10 µm.

5. The solid electrolyte powder according to any one of claims 1 to 4, wherein
the solid electrolyte powder is a sulfide solid electrolyte powder.

6. A solid electrolyte layer comprising the solid electrolyte powder according to any one of claims 1 to 5.

7. A lithium-ion all-solid-state battery, comprising:
the solid electrolyte layer according to claim 6;
a positive electrode; and
a negative electrode.
